# EUROPÄISCHE PATENTANMELDUNG

(11) **EP 1 477 729 A1**
(43) Veröffentlichungstag der Anmeldung: **17.11.2004**
(21) Anmeldenummer: 04010985.2
(22) Anmeldetag: 08.05.2004
(51) Int. Cl.: F21S 13/14, A01K 31/00, A61N 5/06

(54) **Beleuchtungsvorrichtung für Haltungsanlagen für Geflügel**

(30) Priorität: 13.05.2003 DE 20307500 U; 24.04.2004 DE 102004020096
(71) Anmelder: David, Christopher, 84332 Hebertsfelden (DE)
(72) Erfinder: David, Christopher, 84332 Hebertsfelden (DE)
(74) Vertreter: Graf, Helmut, Dipl.-Ing.

(57) **Zusammenfassung**

Bei einer Beleuchtungsvorrichtung für Haltungsanlagen für Geflügel (1), mit wenigstens einer Leuchte (2), die an der Haltungsanlage angebracht ist, ist das Leuchtmittel von wenigstens einer Hochleistungs-LED (7) gebildet.

## Beschreibung

Die Erfindung bezieht sich auf eine Beleuchtungsvorrichtung für Haltungsanlagen für Geflügel, insbesondere für Geflügel-Volieren, gemäß Oberbegriff Patentanspruch 1 sowie auf Haltungsanlagen für Geflügel mit einer derartigen Beleuchtungsvorrichtung gemäß Oberbegriff Patentanspruch 10.

Bei Haltungsanlagen für Geflügel ist es durch den meist etagenförmigen Aufbau notwendig, die Futterstellen zusätzlich zu beleuchten, da die Raumbeleuchtung nicht ausreicht, um die in Ebenen gebauten Futterstellen bzw. die Ebenen selbst auszuleuchten. Zur Beleuchtung wurden bisher als Leuchtmittel konventionelle Glühbirnen oder Energiesparlampen in gekapselten Glasgehäusen verwendet, die im Leistungsbereich zwischen 10 und 25 Watt liegen. Bei entsprechender Größe des Betriebs resultiert hieraus ein entsprechend hoher Strombedarf. Die diese Leuchtmittel aufweisenden Lampen oder Leuchten werden in der Regel in Abständen von 1 - 3 m z. B. an den Stollen der Volieren angebracht, wobei der genaue Abstand natürlich von dem verwendeten System abhängt. Häufig kann auch noch erwünscht sein, dass das Leuchtmittel eine bestimmte Farbe aufweist, wodurch die Tiere in bestimmter Weise stimuliert werden können. Farbige Glühlampen sind allerdings relativ teuer.

Aufgrund des zur Verfügung stehenden Platzes, insbesondere der Höhe, befinden sich die Leuchtmittel bzw. deren gekapselte Glasgehäuse im Bewegungsumfeld der Hühner. So kommt es aufgrund von häufigen Berührungen, z. B. durch Anpicken, Anstossen etc., durch die Tiere, zu hohen Ausfällen bei den Leuchtmitteln.

Aufgabe der Erfindung ist es, eine Beleuchtungsvorrichtung für Haltungsanlagen für Geflügel zu schaffen,die einen geringen Stromverbrauch aufweist, einen geringen Platzbedarf erfordert, leicht zu installieren ist und vor allem unempfindlich gegenüber Berührungen und Erschütterung ist.

Zur Lösung dieser Aufgabe ist eine Beleuchtungsvorrichtung entsprechend dem Patentanspruch 1 ausgebildet. Eine Haltungsanlage für Geflügel ist Gegenstand des Patentanspruchs 10.

Die Erfindung verwendet für die Leuchten keine konventionellen Leuchtmittel, wie Glühbirnen, sondern sogenannte High-Power"-LED's oder Hochleistungs-LEDs, die seit einiger Zeit auf dem Markt angeboten werden und insbesondere in Signallampen und Werbedisplays Verwendung finden. Derartige Hochleistungs-LEDs mit einer Leistung von ca. 1 - 5 Watt zeichnen sich u.a. durch einen hohen Wirkungsgrad, einen geringen Stromverbrauch, eine große Farbvielfalt, eine hohe Lebensdauer,eine geringe Wärmeentwicklung und Unempfindlichkeit gegenüber Erschütterungen aus.

Die Erfindung bietet auch einen entscheidenden wirtschaftlichen Vorteil:
Obwohl Hochleistungs-LEDs einen höheren Stückpreis als Glühlampen aufweisen, führt der geringere Stromverbrauch im Laufe der Zeit zu einer schnellen Ammortisierung der größeren Anschaffungskosten. Hinzu kommt noch die hohe Lebensdauer der Hochleistungs-LEDs von derzeit bis zu 100 000 Stunden, wohingegen Glühbirnen eine reguläre Lebensdauer von nur ca. 1 000 Stunden haben, die aber durch die häufigen Erschütterungen bei Haltungsanlagen für Geflügel oder Geflügel-Volieren meist nicht erreicht werden. Nicht zuletzt reduziert sich bei der Erfindung auch der Aufwand zum Austauschen der defekten Lampen ganz erheblich. In der Summe führen diese Faktoren zu einem großen ökonomischen und auch ökologischen Vorteil der Erfindung.

Die Ansteuerung der LEDs erfolgt über geeignete Konstantstromquellen oder andere bekannte elektronische Verfahren zur Ansteuerung von LEDs.

Die Erfindung wird nachfolgend anhand der Figuren an Ausführungsbeispielen näher erläutert. Die Figuren zeigen:
- Fig. 1: Eine Geflügel-Voliere mit einer konventionellen Beleuchtungsvorrichtung;
- Fig. 2: eine Geflügel-Voliere mit erfindungsgemäßer Beleuchtungsvorrichtung;
- Fig. 3: Schnittzeichnung durch eine Leuchte der Beleuchtungsvorrichtung;
- Fig. 4-6: Beispiele für eine Konstantstromversorgung mit serieller Verschaltung

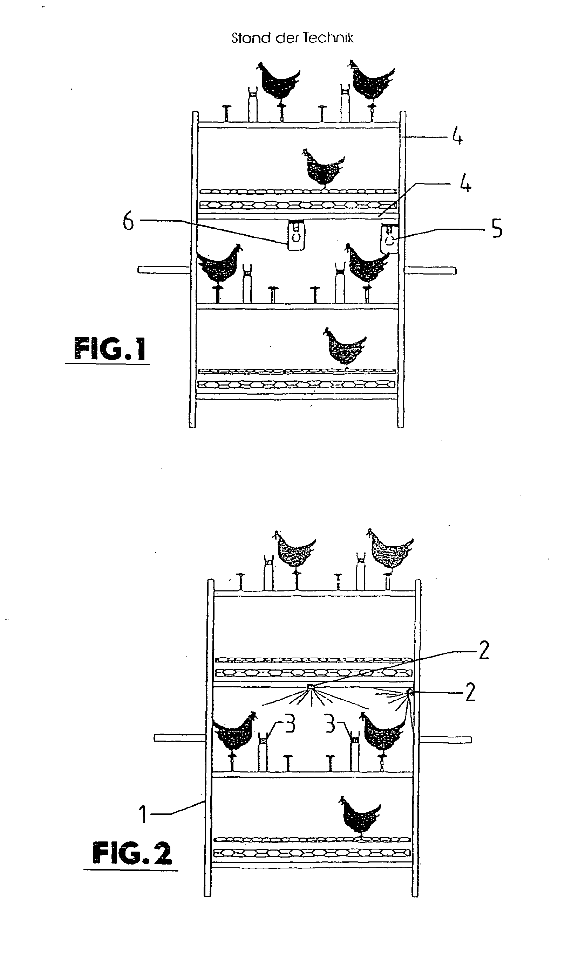

Figur 2 zeigt eine übliche Geflügel-Voliere 1 mit der erfindungsgemäßen Beleuchtungsvorrichtung bzw. mit den Leuchten 2 dieser Beleuchtungsvorrichtung. Die Leuchten 2 dieser Beleuchtungsvorrichtung können variabel, d.h. je nachdem was beleuchtet werden soll, d. h. über den Futterstellen 3, an den Sitzstangen, in oder an den Gehäuseprofilen 4 usw. montiert werden. Schon hieraus wird im Vergleich zur konventionellen Beleuchtungsvorrichtung 5 gemäß der Figur 1 deutlich, dass es bereits durch den geringeren Platzbedarf zu weniger Berührungen mit den Tieren kommt, da die Leuchten weit weniger in den Bewegungsraum der Tiere hineinragen. Kommt es dennoch zu Berührungen, so führt dies im Gegensatz zu konventionellen Leuchten 5 bei den erfindungsgemäßen Leuchten 2 zu keinen Ausfällen des jeweiligen Leuchtmittels.

Die Leuchten 2 können aufgrund ihrer kleinen Größe und ihres leichten Gewichts einfacher als die großen und schwereren Glasgehäuse 6 befestigt werden, wobei zur Befestigung neben Schrauben z. B. auch Kleben in Betracht kommt. Die Verkabelung wird in der Regel im Niederspannungsbereich durchgeführt und führt so zu einer höheren Betriebssicherheit bzw. auch geringerem Gefahrenpotential.

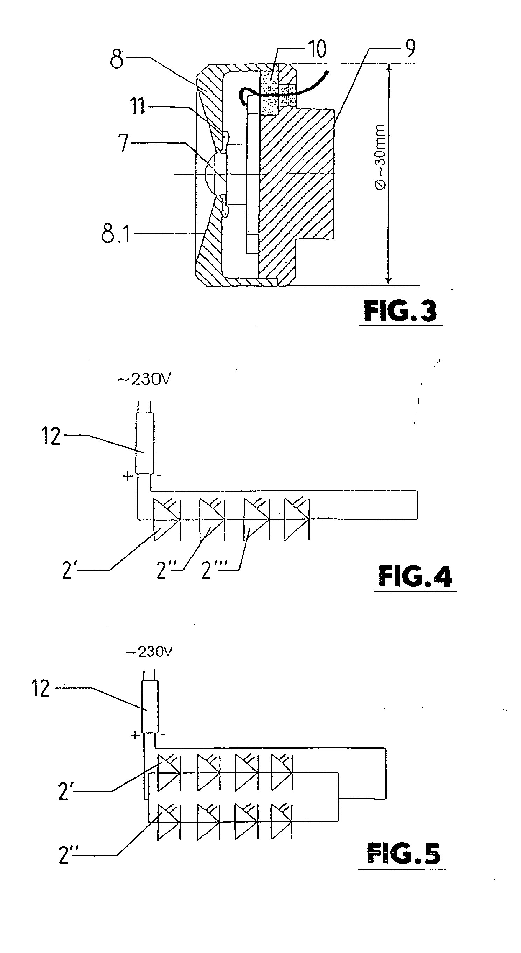

Der Aufbau der jeweiligen Leuchte 2 ist in Figur 3 dargestellt. Als Leuchtmittel ist eine Hochleistungs-LED 7 verwendet. Diese befindet sich in einem zweiteiligen Gehäuse 8, das gegen Feuchtigkeit abgedichtet ist. Das Gehäuse kann vorzugsweise als Drehteil ausgeführt werden. Als Material kommen in erster Linie wärmeleitende Materialien, d.h. in erster Linie Metalle oder NE- Metalle zum Einsatz. Die hintere Gehäusehälfte ist konzentrisch abgesetzt, wobei die ebene Fläche als Befestigungsfläche 9 zum Ankleben benutzt werden kann. Die Abdichtung der Kabeldurchführung aus dem Gehäuse 8 erfolgt durch einen Dichtstopfen 10, die der Hochleistungsdiode 7 durch eine andere geeignete Dichtung 11. Das Gehäuse 8 bildet an der Vorderseite 8.1 einen Reflektor, über dessen Reflektorfläche die Hochleistungsdiode 7 mittig vorsteht. Weiterhin besteht die Möglichkeit, zumindest einige Leuchten 2 mit einer Optik und/oder mit einem Schutzglas für die Hochleistungsdiode 7 zu versehen.

In den Figuren 4 und 5 sind Beispiele für eine Konstantstromversorgung mit serieller Verschaltung und auch in Seriell-Parallel-Verschaltung angeführt, wobei eine Konstantstromquelle 12 die einzelnen Leuchten 2', 2", .... bzw. deren Hochleistungsdioden 7 mit der passenden Stromstärke versorgt.

Vorstehend wurde davon ausgegangen, dass bei den in den Figuren 4 und 5 dargestellten Ausführungsformen jeweils mehrere Leuchten in Serienschaltung oder aber zwei Serienschaltungen mehrerer Leuchten parallel zueinander von einer gemeinsamen Konstantstromquelle 12 betrieben werden. Selbstverständlich besteht auch die Möglichkeit, zumindest in einigen Leuchten 2 der Beleuchtungsvorrichtung mehrere als Leuchtmittel dienende Hochleistungs-LEDs 7 vorzusehen, die dann beispielsweise in Serie geschaltet sind.

Die Serienschaltung von mehreren Leuchten und/oder Hochleistungs-LEDs 7 hat den grundsätzlichen Vorteil, dass die Konstantstromquelle 12 zwar jeweils für eine höhere Spannung, aber nur für einen geringen Strom ausgelegt werden muss, was sich einfacher realisieren lässt als eine Konstantstromquelle 12 für hohe Ströme.

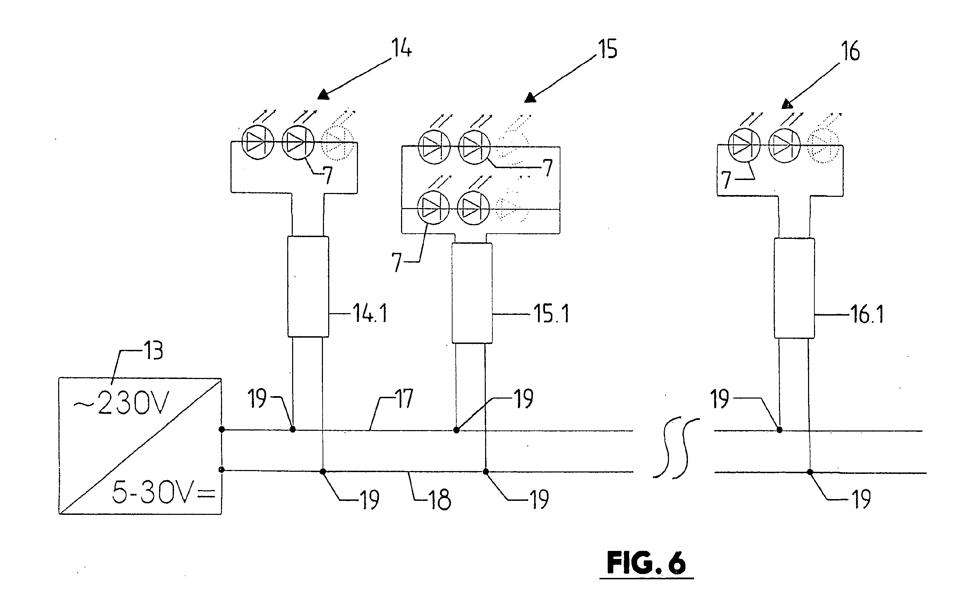

Die Figur 6 zeigt eine Ausführungsform, bei der mit einem gemeinsamen Netzteil 13 eine Vielzahl von Hochleistungs-LEDs 7 betrieben werden. Letztere sind dann wiederum beispielsweise Bestandteil jeweils einer Lampe 2 oder aber mehrere derartige Dioden sind gemeinsam in einer Lampe als Leuchtmittel vorgesehen. Die Hochleistungsdioden 7 sind bei dieser Ausführungsform jeweils in unterschiedlichen Stromkreisen vorgesehen, und zwar bei der dargestellten Ausführungsform in drei Stromkreisen 14, 15 und 16. Die beiden Stromkreise 14 und 16 weisen hierbei jeweils nur eine Serienschaltung von mehreren Hochleistungsdioden 7 auf, während die Hochleistungsdioden 7 im Stromkreis 15 in mehreren parallelen Serienschaltungen, d. h. bei der dargestellten Ausführungsform in zwei parallelen Serienschaltungen, angeordnet sind und jede der parallelen Serienschaltungen die selbe Anzahl von Hochleistungsdioden 7 aufweist.

Angeschlossen sind die Stromkreise 14 - 16 jeweils über einen eigenständigen Konstantstromregler 14.1, 15.1 bzw. 16.1 an den Ausgang des Netzteils 13, welches aus der üblichen Netzspannung von 230 Volt betrieben wird und an seinem Ausgang eine Gleichspannung liefert, beispielsweise im Bereich zwischen 5 und 30 Volt.

Bei der dargestellten Ausführungsform sind die beiden Ausgänge des Netzteils 13 mit jeweils einer Leitung 17 bzw. 18 verbunden, die bei einer Haltungsanlage für Geflügel entlang dieser Anlage verlegt sind und an die die einzelnen Stromkreise, bzw. die Eingänge der Konstantstromregler 14.1, 15.1, 16.1 usw. über entsprechende Verbinder 19, beispielsweise Schneidklemmen-Verbinder angeschlossen sind. Die Konstantstromregler sind für jeden Stromkreis 14 - 16 so ausgewählt bzw. eingestellt, dass sie den für diesen Stromkreis notwendigen Strom liefern.

Die Ausführungsform der Figur 6 hat den Vorteil, dass die Beleuchtungsvorrichtung bzw. -anlage problemlos an die Größe der jeweiligen Haltungsanlage für Geflügel und/oder den speziellen Fordernissen bzw. Wünschen angepasst werden kann. Insbesondere ist auch eine Erweiterung der Beleuchtungsvorrichtung bzw. -anlage problemlos möglich. Das Netzteil 13 kann auch so ausgebildet sein, dass es an seinem Ausgang eine Wechselspannung bzw. Niedervolt-Wechselspannung z.B. zwischen 5 und 30 Volt lierfert.

Die Erfindung wurde voranstehend an Ausführungsbeispielen beschrieben. Es versteht sich, dass zahlreiche Änderungen sowie Abwandlungen möglich sind, ohne das dadurch der der Erfindung zugrunde liegende Erfindungsgedanke verlassen wird. 6

### Bezugszeichenliste

- 1: Geflügel-Volriere
- 2: Leute
- 3: Futterstelle
- 4: Gehäuseprofil der Geflügel-Volriere
- 5, 6: herkömmliche Leuchte
- 7: Hochleistungs-LED
- 8: Gehäuse der Leuchte 2
- 8.1: als Reflektor ausgebildete Vorderseite des Gehäuses 8
- 9: Befestigungsfläche
- 10: abgedichtete Kabeldurchführung bzw. Dichtstopfen
- 11: Dichtung
- 12: Konstantstromquelle
- 13: Netzgerät
- 14, 15, 16: Stromkreis
- 14.1, 15.1, 16.1: Konstantstromregler
- 17, 18: Versorgungsleitung
- 19: Klemme, vorzugsweise Schneidklemm-Verbinder

## Patentansprüche

1. Beleuchtungsvorrichtung für Haltungsanlagen für Geflügel, insbesondere Geflügel-Volieren, mit wenigstens einer Leuchte (2) zur Anbringung in einer Haltungsanlage, beispielsweise über oder an einer Futterstelle und/oder an anderer Stelle oder Ebene der Haltungsanlage, **dadurch gekennzeichnet, dass** das Leuchtmittel der wenigstens einen Leuchte (2) eine Hochleistungs-LED (7) ist.

2. Beleuchtungsvorrichtung gemäß Anspruch 1, **dadurch gekennzeichnet, dass** jede Leuchte (2) wenigstens eine Hochleistungs-LED (7) aufweist.

3. Beleuchtungsvorrichtung gemäß Anspruch 1, **dadurch gekennzeichnet, dass** jede Leuchte (2) wenigstens zwei Hochleistungs-LEDs (7) aufweist

4. Beleuchtungsvorrichtung nach einem der vorhergehenden Ansprüche, **dadurch gekennzeichnet, dass** die wenigstens eine Hochleistungs-LED (7) der jeweiligen Leuchte in einem Gehäuse, vorzugsweise in einem wärmeleitenden Gehäuse (8) eingebaut ist,
wobei beispielsweise sämtliche Hochleistungs-LEDs (7) der jeweiligen Leuchte in einem gemeinsamen Gehäuse, vorzugsweise in einem wärmeleitenden Gehäuse (8) eingebaut sind, und/oder dass das Gehäuse (8) gegen Feuchtigkeit gekapselt ist.

5. Beleuchtungsvorrichtung nach einem der vorhergehenden Ansprüche, **dadurch gekennzeichnet, dass** das Gehäuse (8,9) an den vorgesehenen Stellen durch Kleben befestigbar ist.

6. Beleuchtungsvorrichtung nach einem der vorhergehenden Ansprüche, **dadurch gekennzeichnet, dass** die Befestigung des Gehäuses (8) direkt an Gehäuseprofilen der Haltungsanlage erfolgt.

7. Beleuchtungsvorrichtung nach einem der vorhergehenden Ansprüche, **dadurch gekennzeichnet, dass** die Befestigung des Gehäuses (8) über Befestigungswinkel erfolgt, die an den Gehäuseprofilen befestigt werden.

8. Beleuchtungsvorrichtung nach einem der vorhergehenden Ansprüche, **dadurch gekennzeichnet,**
**dass** mehrere Hochleistungs-LEDs (7) gemeinsam über eine Konstantstromversorgung betrieben werden,
und/oder
**dass** die Hochleistungs-LED (7) im Niederspannungsbereich betrieben wird, und/oder
**dass** das Leuchtmittel der wenigstens einen Leuchte (2) aus einer farbigen Hochleistungs-LED (7) besteht.

9. Beleuchtungsvorrichtung nach einem der vorhergehenden Ansprüche, **dadurch gekennzeichnet, dass** mehrere Gruppen von Lampen (2) und/oder Hochleistungs-LEDs (7) aus einer gemeinsamen Strom- oder Spannungsquelle, beispielsweise aus einem gemeinsamen Netzgerät (13) betrieben werden,
wobei beispielsweise
mehrere Gruppen von Lampen (2) und/oder Hochleistungs-LEDs (7) jeweils über einen eigenen Spannungs- und/oder Stromregler (14.1, 15.1, 16.1) an eine gemeinsame Spannungs- oder Stromquelle (13) angeschlossen sind.

10. Haltungsanlage für Geflügel, insbesondere Gefiügel-Voliere mit einer eine Vielzahl von Lampen (2) aufweisenden Beleuchtungsvorrichtung, **dadurch gekennzeichnet, dass** die Beleuchtungsvorrichtung nach einem der vorhergehenden Ansprüche ausgebildet ist.
